# EUROPÄISCHE PATENTSCHRIFT

(11) **EP 3 248 886 B1**
(45) Veröffentlichungstag und Bekanntmachung des Hinweises auf die Patenterteilung: **08.04.2020**
(21) Anmeldenummer: 16171116.3
(22) Anmeldetag: 24.05.2016
(51) Int. Cl.: B64F 1/22

(54) **TRANSPORTFAHRZEUG FÜR LUFTFAHRZEUGE**
TRANSPORT VEHICLE FOR AIRCRAFT
VEHICULE DE TRANSPORT POUR AERONEFS

(43) Veröffentlichungstag der Anmeldung: 29.11.2017
(73) Patentinhaber: TOKX GmbH & Co. KG, 47799 Krefeld (DE)
(72) Erfinder: Eckert, Kersten, 50374 Erftstadt (DE)
(74) Vertreter: Dr. Stark & Partner Patentanwälte mbB

(56) Entgegenhaltungen:
- EP-A2- 1 785 349
- WO-A1-2013/039409
- FR-A1- 2 266 633
- GB-A- 2 001 588
- US-A- 2 798 729
- US-A1- 2014 072 393

## Beschreibung

Die Erfindung betrifft ein Transportfahrzeug für Luftfahrzeuge, wie z. B. insbesondere Flugzeuge und Helikopter, aber auch andere Typen, wobei das Luftfahrzeug bezogen auf die Breite des Luftfahrzeugs ein mittig angeordnetes einzelnes lenkbares Rad sowie zwei parallel nebeneinander angeordnete, seitlich außermittig angeordnete Hauptfahrwerkräder aufweist, welche üblicherweise nicht lenkbar sind, wobei das Transportfahrzeug seinerseits mit Tragrädern sowie einem Antrieb versehen ist und eine Halteeinrichtung für das lenkbare Rad des Luftfahrzeugs vorgesehen ist, mittels derer dieses lenkbare Rad vom Untergrund abhebbar ist.

Aus der Praxis sind derartige Transportfahrzeuge für Luftfahrzeuge bekannt, bei denen die Hauptfahrwerkräder beim Verfahren des Luftfahrzeugs durch das Transportfahrzeug Bodenkontakt haben.

Nachteilig hierbei ist, dass aufgrund der nicht lenkbaren Hauptfahrwerkräder nur begrenzte Verfahrwege möglich sind. Dies bedingt beispielsweise in engen Bereichen oder auch bei der Unterbringung in einem Hangar, dass aufgrund der beschränkten Lenkbarkeit ein unnötig hoher Platzbedarf beim Verfahren gegeben ist bzw. Freiflächen resultieren, die bei einer freieren Verfahrbarkeit nicht erforderlich wären.

Die Dokumente WO2013/039409 und GB2001588 offenbaren Transportfahrzeuge, die sowohl die Hauptfahrwerkräder als auch das lenkbare Rad des Luftfahrzeuges vom Untergrund abheben können.

Aufgabe der Erfindung ist es, die vorgenannten Nachteile zu vermeiden und ein Transportfahrzeug für Luftfahrzeuge anzugeben, mit dem möglichst frei wählbare Verfahrwege möglich sind.

Diese Aufgabe wird bei einem gattungsgemäßen Transportfahrzeug für Luftfahrzeuge dadurch gelöst, dass das Transportfahrzeug eine längliche Ausbildung hat, wobei die Halteeinrichtung für das lenkbare Rad des Luftfahrzeugs im Bereich des einen Endes bezogen auf die Breite des Transportfahrzeugs mittig vorgesehen ist und im Bereich des anderen Endes zwei parallel nebeneinander angeordnete, seitlich außermittig angeordnete Halteeinrichtungen für die Hauptfahrwerkräder des Luftfahrzeugs vorgesehen sind, welche diese Hauptfahrwerkräder vom Untergrund abheben können, wobei zum einen im Bereich des einen Endes ein um eine vertikale Drehachse schwenkbares vorderes Tragrad angeordnet ist und im Bereich des anderen Endes zwei parallel nebeneinander angeordnete, seitlich jeweils beidseits außermittig angeordnete und jeweils um eine vertikale Drehachse schwenkbare hintere Tragräder vorgesehen sind, und wobei zum anderen der Antrieb im Bereich des anderen Endes des Transportfahrzeugs zwischen den beiden hinteren Tragrädern vorgesehen ist, wobei in einer um eine vertikale Drehachse drehbaren Käfighalterung zwei unabhängig voneinander antreibbare Antriebsräder mit miteinander fluchtenden Drehachsen vorgesehen sind, welche die vertikale Drehachse der Käfighalterung in einem Schnittpunkt schneidet und wobei dieser Schnittpunkt zwischen den Antriebsrädern liegt, wobei der Käfighalterung ihrerseits ein Verdrehantrieb zugeordnet ist, durch den die Ausrichtung der Käfighalterung in Relation zu der länglichen Ausbildung des Transportfahrzeugs veränderbar ist.

Hierdurch ist ein Verfahren des Transportfahrzeugs in beliebigen Richtungen möglich, da durch entsprechende Ansteuerung des Antriebs der jeweils beabsichtigte Verfahrweg frei wählbar ist.

Die Käfighalterung kann bevorzugt über Walzenlager in einem Innenring angeordnet sein.

Der Käfighalterung kann ein Verdrehantrieb zugeordnet sein, durch den die Ausrichtung der Käfighalterung in Relation zu der länglichen Ausbildung des Transportfahrzeugs veränderbar ist. Insoweit kann der Verdrehantrieb mit einem Zahnrad versehen sein, welches mit einem innenseitig an dem Innenring vorgesehenen Zahnkranz zusammenwirkt. Alternativ kann die Anordnung auch umgekehrt sein, so dass der Zahnkranz der Käfighalterung zugeordnet ist und der Verdrehantrieb in einem Bereich des Transportfahrzeugs außerhalb der Käfighalterung angeordnet ist.

Vorzugsweise kann die Halteeinrichtung für das lenkbare Rad eine verschwenkbare Schaufel umfassen, welche derart ausgebildet ist, dass das lenkbare Rad beim Anheben durch Verschwenken der Schaufel keine oder zumindest keine wesentliche Verlagerung in horizontaler Richtung erfährt, sondern ausschließlich oder zumindest nahezu ausschließlich in vertikaler Richtung verlagert wird. Somit kann das Rad in einfacher Weise angehoben werden, ohne dass durch eine wesentliche Verlagerung in horizontaler Richtung Spannung bzw. Belastungen in das Luftfahrzeug eingebracht werden.

Erfindungsgemäß können die Halteeinrichtungen für die Hauptfahrwerkräder jeweils eine gabelförmige Hebeeinrichtung umfassen, wobei jede Hebeeinrichtung zwei parallel zueinander ausgerichtete und beabstandet zueinander vorgesehene Haltebereiche aufweist, von denen zumindest einer seitlich verfahrbar und/oder verschwenkbar angeordnet ist, und wobei die Hebeeinrichtungen jeweils seitlich im Bereich der hinteren Tragräder vorgesehen und zum Anheben der auf ihnen angeordneten Hauptfahrwerkräder vertikal verlagerbar sind. Dabei kann der verfahrbar und/oder verschwenkbar angeordnete Haltebereich derart verlagerbar sein, dass die Hebeeinrichtung von hinten und/oder vorne an das entsprechende Hauptfahrwerkrad heranfahrbar ist, ohne dass es zu einer Kollision des verfahrenen und/oder verschwenkten Haltebereichs mit dem Hauptfahrwerkrad kommt.

Auch können die Hebeeinrichtungen jeweils derart ausgebildet sein, dass das auf ihnen jeweils angeordnete Hauptfahrwerkrad beim Anheben keine oder zumindest keine wesentliche Verlagerung in horizontaler Richtung erfährt, sondern ausschließlich oder zumindest nahezu ausschließlich in vertikaler Richtung verlagert wird. Somit kann das jeweilige Rad in einfacher Weise angehoben werden, ohne dass durch eine wesentliche Verlagerung in horizontaler Richtung Spannung bzw. Belastungen in das Luftfahrzeug eingebracht werden.

Bevorzugt kann die längliche Ausbildung des Transportfahrzeugs in zumindest einem Teilbereich zwischen seinem einen Ende und seinem anderen Ende teleskopierbar, vorzugsweise hydraulisch teleskopierbar, ausgebildet sein. Dies kann beispielsweise durch einen Antrieb erfolgen, welcher bevorzugt einen Elektromotor und/oder einen Hydrostat-Antrieb umfassen kann.

Erfindungsgemäß kann das vordere Tragrad ebenfalls durch einen Antrieb antreibbar sein, der beispielsweise einen Elektromotor und/oder einen Hydrostat-Antrieb umfassen kann.

Auch kann die Ausrichtung des vorderen Tragrads in Relation zu der länglichen Ausbildung des Transportfahrzeugs durch einen geeigneten Antrieb, ein entsprechendes Stellelement oder dergleichen, gezielt veränderbar sein, wobei der Antrieb einen Elektromotor und/oder einen Hydrostat-Antrieb umfassen kann.

Erfindungsgemäß kann der Verdrehantrieb für die Käfighalterung einen Elektromotor und/oder einen Hydrostat-Antrieb umfassen.

Bevorzugt kann der Antrieb für die beiden Antriebsräder wenigstens einen Elektromotor und/oder zumindest einen Hydrostat-Antrieb umfassen.

Vorteilhafterweise kann der Antrieb für das vordere Tragrad einen Elektromotor und/oder einen Hydrostat-Antrieb umfasst.

Erfindungsgemäß kann der Antrieb für zumindest eine Halteeinrichtung einen Elektromotor und/oder einen Hydrostat-Antrieb umfassen.

Bei einem bevorzugten Ausführungsbeispiel der Erfindung kann jeder Elektromotor mit einer Energieversorgung und/oder jeder Hydrostat-Antrieb mit einer Hydraulikversorgung verbunden sein, wobei vorzugsweise im Falle mehrerer Antriebe gleichen Typs (Elektromotor bzw. Hydrostat-Antrieb) eine gemeinsame Energieversorgung bzw. Hydraulikversorgung für wenigstens zwei Antriebe gleichen Typs (Elektromotor bzw. Hydrostat-Antrieb) vorgesehen ist.

Weiterhin kann das Transportfahrzeug im Bereich eines Endes, bevorzugt des hinteren Endes, mit einer visuellen Anzeigeeinrichtung für eine bevorstehende und/oder eine aktuell erfolgende Tätigkeit wenigstens eines Antriebs versehen sein, wobei die Anzeigeeinrichtung vorzugsweise eine linienförmige, entsprechend der Fahrrichtung der beiden Antriebsräder ausgerichteten Anordnung mehrerer Anzeigeeinheiten umfasst.

Bei einem bevorzugten Ausführungsbeispiel der Erfindung können die in der Käfighalterung vorgesehenen technischen Bauteile autark ohne eine physische elektrische Verbindung in einem Bereich des Transportfahrzeugs außerhalb der Käfighalterung ausgebildet sein, so dass ein beliebiges Verdrehen der Käfighalterung gegenüber dem restlichen Transportfahrzeug, beispielsweise mehrfach um 360°, möglich ist, ohne dass Verbindungselemente vorgesehen sind, welche verschließen können und/oder die möglichen Verdrehwinkel limitieren. Hierzu können sämtliche technische Bauteile, wie Energieversorgung und/oder Antrieb und/oder Empfangseinrichtung für eine Funkbedienung etc. im Inneren der Käfighalterung vorgesehen sein.

Im Folgenden wird ein in der Zeichnung dargestelltes Ausführungsbeispiel der Erfindung erläutert. Es zeigen:
- Fig. 1: eine Draufsicht von schräg oben auf ein erfindungsgemäßes Transportfahrzeug,
- Fig. 2: die unterseitige Ansicht des Gegenstands nach Fig. 1,
- Fig. 3 - 7: verschiedene Teilansichten des Gegenstands nach Fig. 1 im Betrieb,
- Fig. 8: den hinteren Bereich des Gegenstands nach Fig. 1 in offener Darstellung in einer Ausrichtung für Geradeausfahrt und
- Fig. 9: den hinteren Bereich des Gegenstands nach Fig. 1 in offener Darstellung in einer Ausrichtung für seitlich schräges Verfahren.

In allen Figuren werden für gleiche bzw. gleichartige Bauteile übereinstimmende Bezugszeichen verwendet.

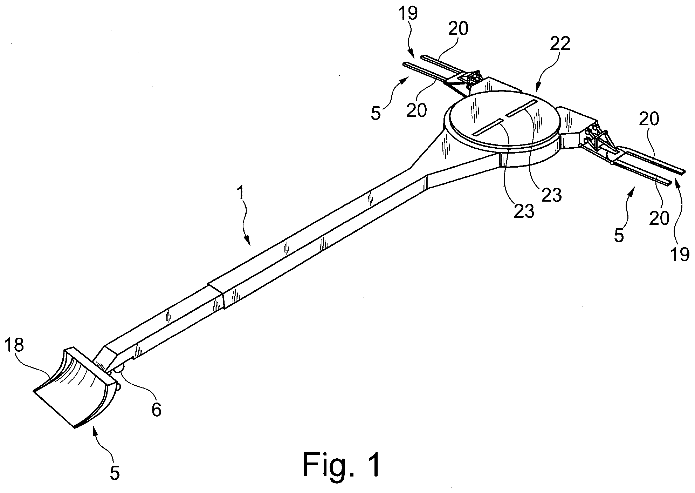

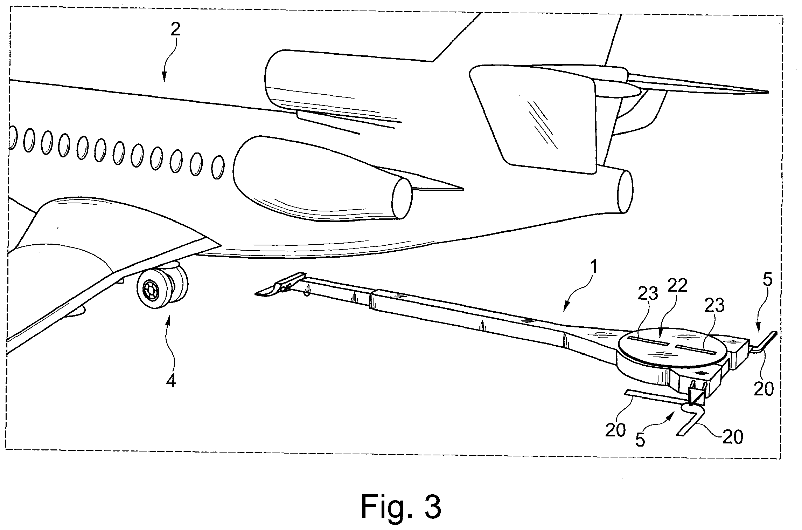

Fig. 1 zeigt ein Transportfahrzeug 1 für Luftfahrzeuge. Diese können, wie beispielsweise in Fig. 3 gezeigt, als Flugzeug 2 ausgebildet sein. Dabei weist das Flugzeug 2 bezogen auf seine Breite ein mittig im vorderen Bereich angeordnetes einzelnes lenkbares Rad 3 sowie zwei parallel nebeneinander angeordnete, seitlich außermittig angeordnete, nicht lenkbare Hauptfahrwerkräder 4 im mittleren Bereich auf. Diese können auch jeweils als Mehrfachbereifung, beispielsweise als Zwillingsräder oder dergleichen ausgeführt sein.

Das Transportfahrzeug 1 hat generell eine längliche Ausbildung und ist mit einer Halteeinrichtung 5 für das lenkbare Rad 3 des Flugzeugs 2 versehen, mittels derer dieses lenkbare Rad 3 vom Untergrund abhebbar ist. Die Halteeinrichtung 5 ist im Bereich des einen Endes, bezogen auf die Breite des Transportfahrzeugs 1, mittig vorgesehen. Im Bereich des anderen Endes sind zwei parallel nebeneinander angeordnete, seitlich außermittig angeordnete Halteeinrichtungen 5 für die Hauptfahrwerkräder 4 des Flugzeugs 2 vorgesehen, welche diese vom Untergrund abheben können.

Die längliche Ausbildung des Transportfahrzeugs 1 ist in einem Teilbereich zwischen ihren beiden Enden teleskopierbar ausgebildet.

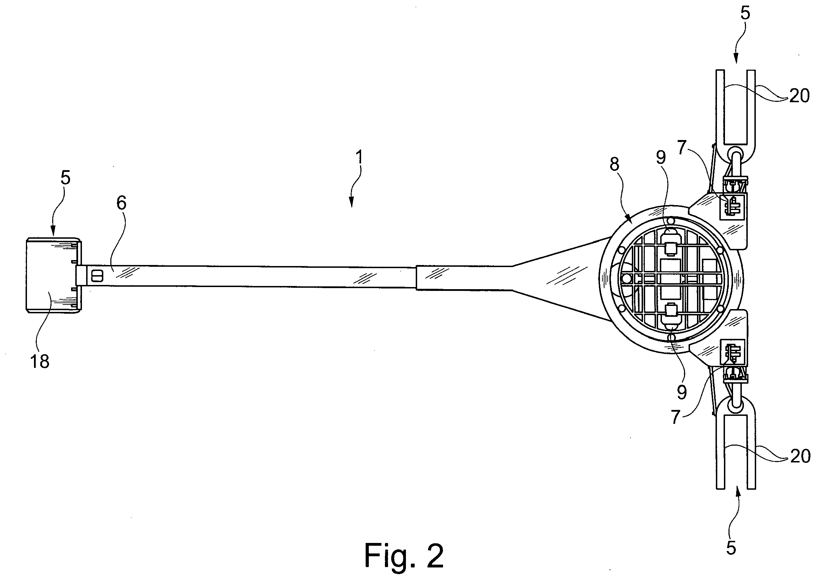

Im Bereich des einen (vorderen) Endes des Transportfahrzeugs 1 ist ein um eine vertikale Drehachse schwenkbares vorderes Tragrad 6 angeordnet und im Bereich des anderen (hinteren) Endes des Transportfahrzeugs 1 sind zwei parallel nebeneinander angeordnete, seitlich jeweils beidseits außermittig angeordnete hintere Tragräder 7 vorgesehen, die ebenfalls jeweils um eine vertikale Drehachse schwenkbar sind (vgl. Fig. 2).

Weiterhin ist im Bereich des anderen (hinteren) Endes des Transportfahrzeugs 1 zwischen den beiden hinteren Tragrädern 7 ein Antrieb 8 vorgesehen.

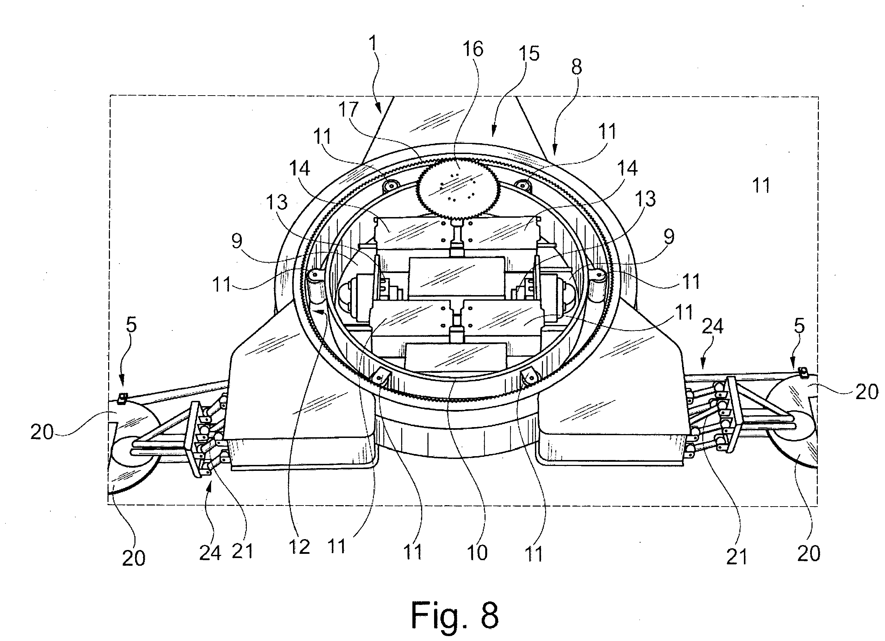

Wie aus Fig. 8 ersichtlich, umfasst der Antrieb 8 zwei unabhängig voneinander antreibbare Antriebsräder 9 mit miteinander fluchtenden Drehachsen, welche in einer um eine vertikale Drehachse drehbaren Käfighalterung 10 vorgesehen sind, wobei die vertikale Drehachse der Käfighalterung die miteinander fluchtenden Drehachsen der Antriebsräder 9 in einem Schnittpunkt schneidet, welcher zwischen den beiden Antriebsrädern 9 liegt. Die Antriebsräder sind jeweils mittels eines Antriebs, welcher einen Elektromotor 13 pro Antriebsrad 9 umfasst, antreibbar.

Jeder Elektromotor 13 ist mit einer eigenen Energieversorgung in Form einer Batterie bzw. eines Akkumulators 14 verbunden.

Die Käfighalterung 10 ihrerseits ist über Walzenlager 11 in einem Innenring 12 angeordnet und ihr ist ein Verdrehantrieb 15 zugeordnet, durch den die Ausrichtung der Käfighalterung 10 in Relation zu der länglichen Ausbildung des Transportfahrzeugs 1 veränderbar ist. Hierzu ist der Verdrehantrieb 15 mit einem Zahnrad 16 versehen, welches mit einem innenseitig an dem Innenring vorgesehenen Zahnkranz 17 zusammenwirkt. Das Zahnrad 16 wird durch einen in der Zeichnung nicht dargestellten Elektromotor angetrieben, so dass ein Verdrehwinkel von mehr als 360° gegeben ist und ein Drehen des Transportfahrzeugs 1 auf der Stelle möglich ist.

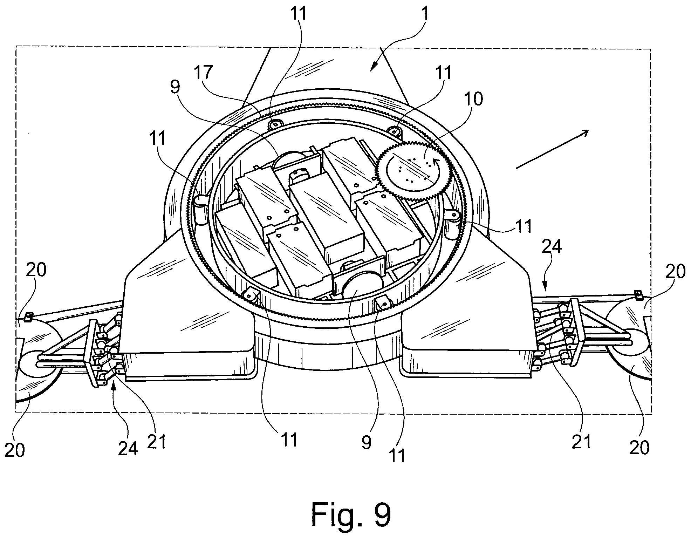

Durch entsprechendes Verdrehen des Verdrehantriebs 15 gegenüber der länglichen Ausbildung des Transportfahrzeugs 1 (vgl. Fig. 1) mittels entsprechendem Antreiben des Zahnrads 16 wurde die Fahrrichtung der Antriebsräder 9 schräg in Bezug auf das Transportfahrzeug 1 gestellt. Werden nun beide Antriebsräder 9 gleichermaßen angetrieben, erfolgt ein schräges Verfahren des Transportfahrzeugs 1, wie in Fig. 9 durch den Pfeil mit der Beschriftung "Fahrtrichtung" angegeben. Wenn ein Antriebsrad 9 stärker angetrieben wird als das andere Antriebsrad 9, ist eine Kurvenfahrt möglich.

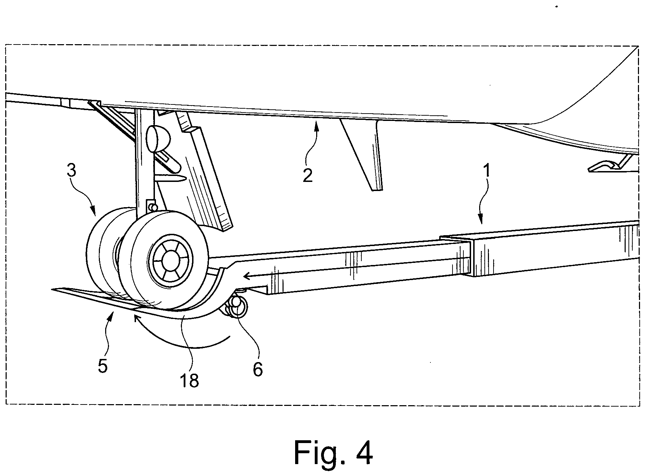

Wie in Fig. 4 gezeigt, umfasst die Halteeinrichtung 5 für das lenkbare Rad 3 des Flugzeugs 2 eine verschwenkbare Schaufel 18. Durch die spezielle Ausbildung der Schaufel 18 erfährt das lenkbare Rad 3 beim Anheben durch Verschwenken der Schaufel 18 keine wesentliche Verlagerung in horizontaler Richtung, sondern wird zumindest nahezu ausschließlich in vertikaler Richtung verlagert (vgl. Fig. 4).

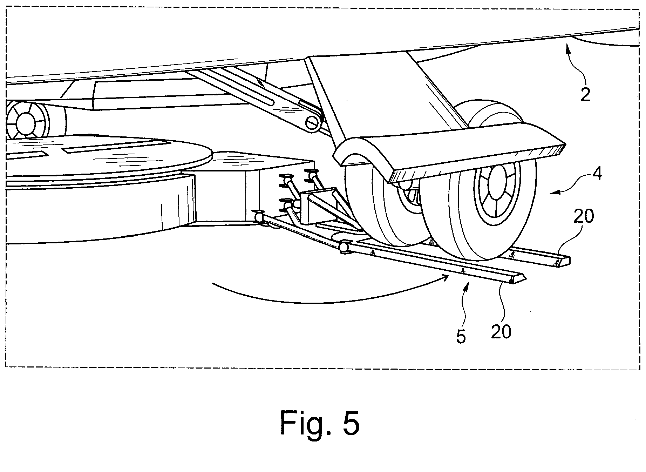

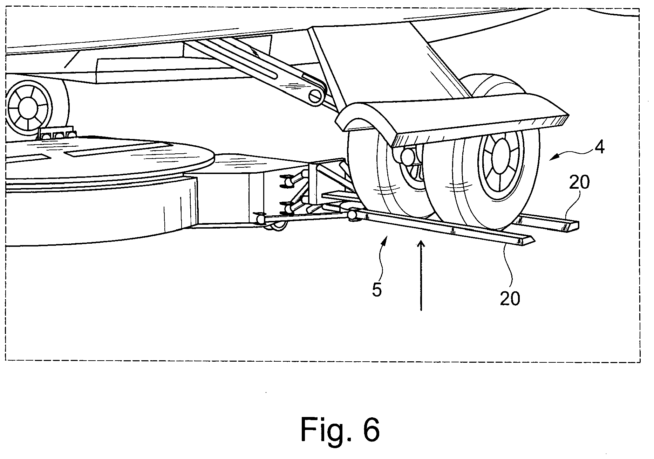

Wie aus den Fig. 5 und 6 ersichtlich, umfassen die Halteeinrichtungen 5 für die Hauptfahrwerkräder 4 jeweils eine gabelförmige Hebeeinrichtung 19, wobei jede Hebeeinrichtung 19 zwei parallel zueinander ausgerichtete und beabstandet zueinander vorgesehene Haltebereiche 20 aufweist, von denen der vordere seitlich verschwenkbar angeordnet ist, so dass die geöffnete Hebeeinrichtung 19 von hinten an das entsprechende Hauptfahrwerkrad 4 heranfahrbar ist, ohne dass es zu einer Kollision des verfahrenen und/oder verschwenkten Haltebereichs 20 mit dem Hauptfahrwerkrad 4 kommt (vgl. Fig. 6).

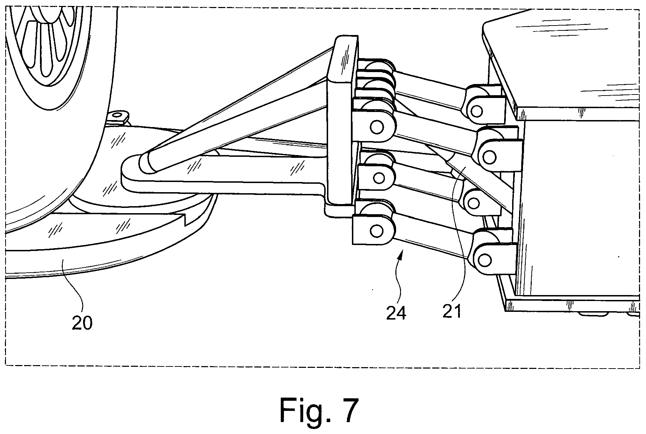

Für das Anheben ist dabei eine Parallelogramm-Führung 24 vorgesehen, welche durch einen Hydraulikzylinder 21 betätigbar ist. Wie in Fig. 2 erkennbar, sind die Hebeeinrichtungen 19 jeweils seitlich im Bereich der hinteren Tragräder 7 (vgl. Fig. 7) vorgesehen.

Das Transportfahrzeug 1 umfasst weiterhin im Bereich des hinteren Endes eine visuelle Anzeigeeinrichtung 22 für eine bevorstehende und/oder eine aktuell erfolgende Tätigkeit wenigstens eines Antriebs 8, wobei die Anzeigeeinrichtung 22 zwei linienförmige, entsprechend der Fahrrichtung der beiden Antriebsräder 9 ausgerichteten Anordnungen mehrerer Anzeigeeinheiten 23 umfasst (vgl. Fig. 1 und 3). Die Anzeigeeinheiten 23 sind farbig unterschiedlich ausgebildet, so dass die Anzeigeeinheiten 23 der Anordnung, welche nach vorne zum vorderen Ende des Transportfahrzeugs 1 weisend angeordnet ist, grün leuchten können und die Anzeigeeinheiten 23 der Anordnung, welche nach hinten zum hinteren Ende des Transportfahrzeugs 1 weisend angeordnet ist, rot leuchten können.

Die Steuerung des Transportfahrtzeugs 1 erfolgt dabei insoweit, dass bereits vor einem Verfahren bei nur geringfügiger Betätigung eines entsprechenden Stellorgangs, beispielsweise eines Hebels an einer Fernsteuerung, eine Anzeige des bei weiterem gleichgerichteten Betätigen des Stellorgans erfolgenden Verfahrens durch Aufleuchten der jeweiligen Anzeigeeinheiten 23 angezeigt wird. Diese können auch als Lauflicht ansteuerbar sein, wobei die Geschwindigkeit in Anlehnung an die Verfahrgeschwindigkeit anpassbar sein kann.

## Patentansprüche

1. Transportfahrzeug (1) für Luftfahrzeuge, insbesondere Flugzeuge (2) und Helikopter, die bezogen auf die Breite des Luftfahrzeugs ein mittig angeordnetes einzelnes lenkbares Rad (3) sowie zwei parallel nebeneinander angeordnete, seitlich außermittig angeordnete Hauptfahrwerkräder (4) aufweisen, wobei das Transportfahrzeug (1) seinerseits mit Tragrädern (6, 7) sowie einem Antrieb (8) versehen ist und eine Halteeinrichtung (5) für das lenkbare Rad (3) des Luftfahrzeugs vorgesehen ist, welches dieses Rad (3) vom Untergrund abheben kann, wobei das Transportfahrzeug (1) eine längliche Ausbildung hat, wobei die Halteeinrichtung (5) für das lenkbare Rad (3) des Luftfahrzeugs im Bereich des einen Endes, bezogen auf die Breite des Transportfahrzeugs (1), mittig vorgesehen ist und im Bereich des anderen Endes zwei parallel nebeneinander angeordnete, seitlich außermittig angeordnete Halteeinrichtungen (5) für die Hauptfahrwerkräder (4) des Luftfahrzeugs vorgesehen sind, welche diese Hauptfahrwerkräder (4) vom Untergrund abheben können, wobei zum einen im Bereich des einen Endes ein um eine vertikale Drehachse schwenkbares vorderes Tragrad (6) angeordnet ist und im Bereich des anderen Endes zwei parallel nebeneinander angeordnete, seitlich jeweils beidseits außermittig angeordnete und jeweils um eine vertikale Drehachse schwenkbare hintere Tragräder (7) vorgesehen sind, und wobei zum anderen der Antrieb (8) im Bereich des anderen Endes des Transportfahrzeugs (1) zwischen den beiden hinteren Tragrädern (7) vorgesehen ist, wobei in einer um eine vertikale Drehachse drehbaren Käfighalterung (10) zwei unabhängig voneinander antreibbare Antriebsräder (9) mit miteinander fluchtenden Drehachsen vorgesehen sind, welche die vertikale Drehachse der Käfighalterung (10) in einem Schnittpunkt schneidet und wobei dieser Schnittpunkt zwischen den Antriebsrädern (9) liegt, wobei der Käfighalterung (10) ihrerseits ein Verdrehantrieb (15) zugeordnet ist, durch den die Ausrichtung der Käfighalterung (10) in Relation zu der länglichen Ausbildung des Transportfahrzeugs (1) veränderbar ist.

2. Transportfahrzeug (1) nach dem vorhergehenden Anspruch, **dadurch gekennzeichnet, dass** die Halteeinrichtung (5) für das lenkbare Rad (3) eine verschwenkbare Schaufel (18) umfasst, welche derart ausgebildet ist, dass das lenkbare Rad (3) beim Anheben durch Verschwenken der Schaufel (18) keine oder zumindest keine wesentliche Verlagerung in horizontaler Richtung erfährt, sondern ausschließlich oder zumindest nahezu ausschließlich in vertikaler Richtung verlagert wird.

3. Transportfahrzeug (1) nach einem der vorhergehenden Ansprüche, **dadurch gekennzeichnet, dass** die Halteeinrichtungen (5) für die Hauptfahrwerkräder (4) jeweils eine gabelförmige Hebeeinrichtung (19) umfassen, wobei diese jeweils zwei parallel zueinander ausgerichtete und beabstandet zueinander vorgesehene Haltebereiche (20) aufweisen, von denen zumindest einer seitlich verfahrbar und/oder verschwenkbar angeordnet ist, wobei die Hebeeinrichtungen (19) jeweils seitlich im Bereich der hinteren Tragräder (7) vorgesehen und zum Anheben der auf ihnen angeordneten Hauptfahrwerkräder (4) vertikal verlagerbar sind.

4. Transportfahrzeug (1) nach dem vorhergehenden Anspruch, **dadurch gekennzeichnet, dass** die Hebeeinrichtungen (19) jeweils derart ausgebildet sind, dass das auf ihnen jeweils angeordnete Hauptfahrwerkrad (4) beim Anheben keine oder zumindest keine wesentliche Verlagerung in horizontaler Richtung erfährt, sondern ausschließlich oder zumindest nahezu ausschließlich in vertikaler Richtung verlagert wird.

5. Transportfahrzeug (1) nach einem der vorhergehenden Ansprüche, **dadurch gekennzeichnet, dass** die längliche Ausbildung des Transportfahrzeugs (1) in zumindest einem Teilbereich zwischen seinem einen Ende und seinem anderen Ende teleskopierbar, vorzugsweise hydraulisch teleskopierbar, ausgebildet ist.

6. Transportfahrzeug (1) nach einem der vorhergehenden Ansprüche, **dadurch gekennzeichnet, dass** das vordere Tragrad (6) ebenfalls durch einen Antrieb antreibbar ist.

7. Transportfahrzeug (1) nach einem der vorhergehenden Ansprüche, **dadurch gekennzeichnet, dass** die Ausrichtung des vorderen Tragrads (6) in Relation zu der länglichen Ausbildung des Transportfahrzeugs (1) durch einen geeigneten Antrieb, ein entsprechendes Stellelement oder dergleichen, gezielt veränderbar ist.

8. Transportfahrzeug (1) nach einem der vorhergehenden Ansprüche, **dadurch gekennzeichnet, dass** der Verdrehantrieb (15) für die Käfighalterung (10) einen Elektromotor und/oder einen Hydrostat-Antrieb umfasst.

9. Transportfahrzeug (1) nach einem der vorhergehenden Ansprüche, **dadurch gekennzeichnet, dass** der Antrieb (8) für die beiden Antriebsräder (9) wenigstens einen Elektromotor (13) und/oder zumindest einen Hydrostat-Antrieb umfasst.

10. Transportfahrzeug (1) nach einem der vorhergehenden Ansprüche, **dadurch gekennzeichnet, dass** der Antrieb (8) für die Ausrichtung des vorderen Tragrads (6) einen Elektromotor und/oder einen Hydrostat-Antrieb umfasst.

11. Transportfahrzeug (1) nach einem der vorhergehenden Ansprüche, **dadurch gekennzeichnet, dass** der Antrieb für das vordere Tragrad (6) einen Elektromotor und/oder einen Hydrostat-Antrieb umfasst.

12. Transportfahrzeug (1) nach einem der vorhergehenden Ansprüche, **dadurch gekennzeichnet, dass** der Antrieb für zumindest eine Halteeinrichtung (5) einen Elektromotor und/oder einen Hydrostat-Antrieb umfasst.

13. Transportfahrzeug (1) nach einem der Ansprüche 8 bis 12, **dadurch gekennzeichnet, dass** jeder Elektromotor mit einer Energieversorgung und/oder jeder Hydrostat-Antrieb mit einer Hydraulikversorgung verbunden ist, wobei vorzugsweise im Falle mehrerer Antriebe gleichen Typs (Elektromotor bzw. Hydrostat-Antrieb) eine gemeinsame Energieversorgung bzw. Hydraulikversorgung für wenigstens zwei Antriebe gleichen Typs (Elektromotor bzw. Hydrostat-Antrieb) vorgesehen ist.

14. Transportfahrzeug (1) nach einem der vorhergehenden Ansprüche, **dadurch gekennzeichnet, dass** das Transportfahrzeug (1) im Bereich eines Endes, bevorzugt des hinteren Endes, eine visuelle Anzeigeeinrichtung (22) für eine bevorstehende und/oder eine aktuell erfolgende Tätigkeit wenigstens eines Antriebs (8) aufweist, wobei die Anzeigeeinrichtung (22) vorzugsweise mit einer linienförmigen, entsprechend der Fahrrichtung der beiden Antriebsräder (9) ausgerichteten Anordnung mehrerer Anzeigeeinheiten (23) versehen ist.

15. Transportfahrzeug (1) nach einem der vorhergehenden Ansprüche, **dadurch gekennzeichnet, dass** die in der Käfighalterung (10) vorgesehenen technischen Bauteile autark ohne eine physische elektrische Verbindung in einem Bereich des Transportfahrzeugs (1) außerhalb der Käfighalterung (10) ausgebildet sind.

## Claims

1. Transport vehicle (1) for aircraft, in particular fixed wing (2) and helicopters, which comprise a single steerable wheel (3) arranged in the middle related to the width of the aircraft, as well as main undercarriage wheels (4) arranged parallel to one another and at the sides away from the centre, wherein the transport vehicle (1) is provided in turn with support load-bearing wheels (6, 7) and a drive unit (8), and a holding device (5) for the steerable wheel (3) of the aircraft, which is capable of raising this wheel (3) from the ground surface, wherein the transport vehicle (1) has a longitudinal configuration, wherein the holding device (5) for the steerable wheel (3) of the aircraft in the region of one end, related to the width of the transport vehicle (1), is arranged in the middle, and in the region of the other end comprises two holding devices (5), arranged parallel to one another and at the sides away from the centre, for the main undercarriage wheels (4) of the aircraft, which are capable of lifting these main undercarriage wheels (4) from the ground surface, wherein, arranged in the region of one end is a front support load-bearing wheel (6), capable of pivoting about a vertical axis of rotation, and in the region of the other end are arranged two rear support load-bearing wheels (7), arranged parallel to one another and in each case to the sides and away from the centre, and in each case capable of pivoting about a vertical axis of rotation, and wherein the drive unit (8) is arranged in the region of the other end of the transport vehicle (1) between the two rear support load-bearing wheels (7), wherein two drive wheels (9), capable of being driven independently of one another, are arranged in a cage holding element (10) capable of pivoting about a vertical axis of rotation, with axes of rotation flush to one another and which intersect the axis of rotation of the cage holding element (10) at a point of intersection, and wherein this point of intersection lies between the drive wheels (9), wherein the cage holding element (10) is in turn assigned to a rotation drive unit (15), by means of which the alignment of the cage holding element (10) can be changed in relation to the longitudinal configuration of the transport device (1).

2. Transport vehicle (1) according to the preceding claim, **characterised in that** the holding device (5) for the steerable wheel (3) comprises a pivotable shovel-shaped element (18), which is configured in such a way that the steerable wheel (3), when being raised by the pivoting of the shovel-shaped element (18) does not undergo any displacement in the horizontal direction, or at least no substantial displacement, but is displaced exclusively or at least almost exclusively in the vertical direction.

3. Transport vehicle (1) according to any one of the preceding claims, **characterised in that** the holding devices (5) for the main undercarriage wheels (4) in each case comprise a forkshaped lifting device (19), wherein these in each case comprise two holding regions (20), aligned parallel to one another and at a distance from one another, of which at least one is arranged so as to be laterally movable and/or pivotable, wherein the lifting devices (19) are provided in each case on the side in the region of the rear support load-bearing wheels (7) and are capable of being displaced vertically in order to raise the main undercarriage wheels (4) assigned to them.

4. Transport vehicle (1) according to any one of the preceding claims, **characterised in that** the lifting devices (19) are in each case configured in such a way that the main undercarriage wheel (4) assigned to them in each case, when being raised, does not undergo any displacement in the horizontal direction, or at least no substantial displacement, but is displaced exclusively or at least almost exclusively in the vertical direction.

5. Transport vehicle (1) according to any one of the preceding claims, **characterised in that** the longitudinal configuration of the transport vehicle (1) is formed in at least one part region between its one and its other end as telescopic, preferably hydraulically telescopic.

6. Transport vehicle (1) according to any one of the preceding claims, **characterised in that** the front support load-bearing wheel (6) can likewise be driven by a drive wheel.

7. Transport vehicle (1) according to any one of the preceding claims, **characterised in that** the alignment of the front support load-bearing wheel (6) can be specifically changed in relation to the longitudinal alignment of the transport vehicle (1) by means of a suitable drive unit, a corresponding actuation element, or the like.

8. Transport vehicle (1) according to any one of the preceding claims, **characterised in that** the rotation drive unit (15) for the cage holding element (10) comprises an electric motor and/or a hydrostat drive.

9. Transport vehicle (1) according to any one of the preceding claims, **characterised in that** the drive unit (8) for the two drive wheels (9) comprises an electric motor (13) and/or at least one hydrostat drive.

10. Transport vehicle (1) according to any one of the preceding claims, **characterised in that** the drive (8) for the alignment of the front support load-bearing wheel (6) comprises an electric motor and/or a hydrostat drive.

11. Transport vehicle (1) according to any one of the preceding claims, **characterised in that** the drive for the front support load-bearing wheel (6) comprises an electric motor and/or a hydrostat drive.

12. Transport vehicle (1) according to any one of the preceding claims, **characterised in that** the drive for at least one holding device (5) comprises an electric motor and/or a hydrostat drive.

13. Transport vehicle (1) according to any one of the preceding claims 8 to 12, **characterised in that** each electric motor is connected to an energy supply and/or each hydrostat drive is connected to a hydraulic supply, wherein preferably, in the event of there being several drives of the same type (electric motors or hydrostat drives respectively), a common energy supply or hydraulic supply is provided for at least two drives of the same type (electric motors or hydrostat drives)

14. Transport vehicle (1) according to any one of the preceding claims, **characterised in that** the transport vehicle (1) comprises in the region of one end, preferably the rear end, a visual display device (22) for a forthcoming and/or currently being performed activity of at least one drive (8), wherein the display device (22) is provided preferably with a linear arrangement of several display units (23), aligned according to the direction of movement of the two drive wheels (9).

15. Transport vehicle (1) according to any one of the preceding claims, **characterised in that** the technical components provided in the cage holding element (10) are configured as independent, without any physical electrical connection in a region of the transport vehicle (1) outside the cage holding element (10).

## Revendications

1. Véhicule de transport (1) destiné à des aéronefs, en particulier à des avions (2) et à des hélicoptères qui comprennent une roue braquable individuelle (3), placée au centre par rapport à la largeur de l'aéronef, ainsi que deux roues (4) d'un train de roulement principal, agencées en juxtaposition parallèle et occupant des emplacements latéralement excentrés, sachant que ledit véhicule de transport (1) est pour sa part muni de roues de support (6, 7), ainsi que d'un entraînement (8), et sachant qu'il est prévu un dispositif de retenue (5) dédié à ladite roue braquable (3) de l'aéronef et pouvant soulever cette roue (3) à partir du sol, ledit véhicule de transport (1) étant de réalisation allongée, sachant que ledit dispositif de retenue (5) dédié à ladite roue braquable (3) de l'aéronef est prévu, par rapport à la largeur dudit véhicule de transport (1), au centre dans la région de l'une des extrémités, et sachant que deux dispositifs de retenue (5) dédiés auxdites roues (4) du train de roulement principal de l'aéronef, aptes à soulever ces roues (4) du train de roulement principal à partir du sol, agencés en juxtaposition parallèle et occupant des emplacements latéralement excentrés, sont prévus dans la région de l'autre extrémité, sachant que, d'une part, une roue de support (6) antérieure, pouvant pivoter autour d'un axe vertical de rotation, est disposée dans la région de l'une des extrémités et deux roues de support (7) postérieures, pouvant pivoter respectivement autour d'un axe vertical de rotation, agencées en juxtaposition parallèle et occupant des emplacements respectifs latéralement excentrés de part et d'autre, sont prévues dans la région de l'autre extrémité, et sachant, d'autre part, que ledit entraînement (8) est prévu dans la région de l'autre extrémité dudit véhicule de transport (1), entre lesdites deux roues de support (7) postérieures, deux roues d'entraînement (9), pouvant être menées indépendamment l'une de l'autre et prévues dans une cage de maintien (10) apte à tourner autour d'un axe vertical de rotation, étant dotées d'axes de rotation mutuellement alignés que ledit axe vertical de rotation de la cage de maintien (10) coupe en un point d'intersection, lequel point d'intersection est situé entre lesdites roues d'entraînement (9), ladite cage de maintien (10) étant associée, pour sa part, à un entraînement en rotation (15) par l'intermédiaire duquel l'orientation de ladite cage de maintien (10) peut être modifiée par rapport à la réalisation allongée dudit véhicule de transport (1).

2. Véhicule de transport (1) selon la revendication précédente, **caractérisé par le fait que** le dispositif de retenue (5), dédié à la roue braquable (3), est pourvu d'une augette pivotante (18) réalisée de façon telle que, lors du soulèvement par pivotement de ladite augette (18), ladite roue braquable (3) ne subisse aucun décalage ou, pour le moins, aucun décalage substantiel dans la direction horizontale, mais soit exclusivement ou, pour le moins, quasi exclusivement décalée dans la direction verticale.

3. Véhicule de transport (1) selon l'une des revendications précédentes, **caractérisé par le fait que** les dispositifs de retenue (5), dédiés aux roues (4) du train de roulement principal, sont respectivement pourvus d'un dispositif de levage (19) en forme de fourche comprenant, à chaque fois, deux zones de maintien (20) orientées parallèlement l'une à l'autre, prévues à distance l'une de l'autre, et dont au moins l'une est agencée avec faculté de déplacement et/ou de pivotement dans le sens latéral, sachant que les dispositifs respectifs de levage (19) sont prévus latéralement dans la région des roues de support (7) postérieures, et peuvent être décalés verticalement en vue du soulèvement des roues (4) du train de roulement principal qui y sont placées.

4. Véhicule de transport (1) selon la revendication précédente, **caractérisé par le fait que** les dispositifs de levage (19) sont respectivement réalisés de façon telle que la roue respective (4) du train de roulement principal qui y est placée ne subisse, lors du soulèvement, aucun décalage ou, pour le moins, aucun décalage substantiel dans la direction horizontale, mais soit exclusivement ou, pour le moins, quasi exclusivement décalée dans la direction verticale.

5. Véhicule de transport (1) selon l'une des revendications précédentes, **caractérisé par le fait que** la réalisation allongée dudit véhicule de transport (1) est de conception télescopique, de préférence hydrauliquement télescopique dans au moins une région partielle, entre l'une de ses extrémités et son autre extrémité.

6. Véhicule de transport (1) selon l'une des revendications précédentes, **caractérisé par le fait que** la roue de support (6) antérieure peut être semblablement menée par l'intermédiaire d'un entraînement.

7. Véhicule de transport (1) selon l'une des revendications précédentes, **caractérisé par le fait que** l'orientation de la roue de support (6) antérieure, par rapport à la réalisation allongée dudit véhicule de transport (1), peut être adéquatement modifiée par l'intermédiaire d'un entraînement approprié, d'un élément de réglage correspondant, ou d'un moyen similaire.

8. Véhicule de transport (1) selon l'une des revendications précédentes, **caractérisé par le fait que** l'entraînement en rotation (15), dédié à la cage de maintien (10), inclut un moteur électrique et/ou un entraînement hydrostatique.

9. Véhicule de transport (1) selon l'une des revendications précédentes, **caractérisé par le fait que** l'entraînement (8), dédié aux deux roues d'entraînement (9), inclut au moins un moteur électrique (13) et/ou au moins un entraînement hydrostatique.

10. Véhicule de transport (1) selon l'une des revendications précédentes, **caractérisé par le fait que** l'entraînement (8), affecté à l'orientation de la roue de support (6) antérieure, inclut un moteur électrique et/ou un entraînement hydrostatique.

11. Véhicule de transport (1) selon l'une des revendications précédentes, **caractérisé par le fait que** l'entraînement, dédié à la roue de support (6) antérieure, inclut un moteur électrique et/ou un entraînement hydrostatique.

12. Véhicule de transport (1) selon l'une des revendications précédentes, **caractérisé par le fait que** l'entraînement, dédié à au moins un dispositif de retenue (5), inclut un moteur électrique et/ou un entraînement hydrostatique.

13. Véhicule de transport (1) selon l'une des revendications 8 à 12, **caractérisé par le fait que** chaque moteur électrique est raccordé à une alimentation en énergie et/ou chaque entraînement hydrostatique est raccordé à une alimentation hydraulique, sachant que de préférence, dans le cas de plusieurs entraînements de même type (moteur électrique, respectivement entraînement hydrostatique), une alimentation en énergie ou une alimentation hydraulique, respectivement commune, est prévue pour au moins deux entraînements de même type (moteur électrique, respectivement entraînement hydrostatique).

14. Véhicule de transport (1) selon l'une des revendications précédentes, **caractérisé par le fait que** ledit véhicule de transport (1) est doté dans la région d'une extrémité, préférentiellement de l'extrémité postérieure, d'un dispositif (22) d'affichage visuel dévolu à une activité d'au moins un entraînement (8), imminente et/ou en cours de déroulement, ledit dispositif d'affichage (22) étant muni, de préférence, d'un ensemble linéaire comptant plusieurs unités d'affichage (23) et orienté en concordance avec la direction de déplacement des deux roues d'entraînement (9).

15. Véhicule de transport (1) selon l'une des revendications précédentes, **caractérisé par le fait que** les composants techniques prévus dans la cage de maintien (10) sont de conception autonome, sans connexion électrique physique dans une région dudit véhicule de transport (1) à l'extérieur de ladite cage de maintien (10).
